# FASCICULE DE BREVET EUROPEEN

(11) **EP 0 850 200 B1**
(45) Date de publication et mention de la délivrance du brevet: **02.05.2003**
(21) Numéro de dépôt: 97932867.1
(22) Date de dépôt: 09.07.1997
(51) Int. Cl.: C03B 5/235

(54) **PROCEDE ET DISPOSITIF POUR LA REDUCTION DE L'EMISSION DE NOx DANS UN FOUR DE VERRERIE**
VERFAHREN UND VORRICHTUNG ZUR REDUZIERUNG VON NOx EMISSIONEN IN EINER GLASOFEN
METHOD AND DEVICE FOR REDUCING NOx EMISSION IN A GLASS FURNACE

(30) Priorité: 11.07.1996 FR 9608663
(43) Date de publication de la demande: 01.07.1998
(73) Titulaire: SAINT-GOBAIN GLASS FRANCE, 92400 Courbevoie (FR)
(72) Inventeur: MOREAU, Raymond, F-78290 Croissy sur Seine (FR)
(74) Mandataire: Renous Chan, Véronique
(86) Numéro de dépôt international: FR9701244
(87) Numéro de publication internationale: WO98002386

(56) Documents cités:
- EP-A- 0 577 881
- EP-A- 0 599 548
- EP-A- 0 640 794
- EP-A- 0 699 634
- DE-C- 4 244 068
- US-A- 4 599 100
- US-A- 4 874 311
- US-A- 4 911 744
- US-A- 5 147 438

## Description

L'invention porte sur les fours de verrerie, notamment les fours utilisés dans la fabrication de verre plat du type « float », et elle concerne plus précisément un procédé et un dispositif visant à réduire l'émission des NOₓ dans les effluents gazeux en sortie de four.

Il est une préoccupation des fabricants de fours de verrerie, de limiter le plus possible les émissions de NOₓ dans les fumées de combustion, et cela en raison du fait notamment que les normes sont de plus en plus exigeantes à ce sujet. Ainsi conviendrait-il de limiter ces émissions à 500mg/m³ de NO_{x.} ce que les procédés connus ne permettent pas d'obtenir, ou le permettent mais au détriment de leur rentabilité.

On connaît les facteurs qui influent sur la formation des NOₓ. Ce sont essentiellement la température car leur émission croît exponentiellement au dessus de 1300°c, ou l'excès d'air puisque les NOₓ dépendent de la racine carrée de la concentration en oxygène, ou encore la concentration en N₂.

Une méthode connue consiste à faire intervenir un agent réducteur sur les gaz émis pour que les NOₓ soient convertis en azote. Cet agent peut-être de l'ammoniac mais on sait les inconvénients qu'il y a à stocker et manipuler un tel produit. On peut aussi utiliser un gaz naturel comme agent réducteur, mais au détriment de la consommation du four.

Il s'avère donc préférable de s'affranchir de ces méthodes, et on a déjà pensé à adopter des mesures dites primaires, par exemple en empêchant la formation de NOₓ au niveau de la flamme elle-même et cela par la réduction de l'excès d'air de combustion. Pour cela on a cherché à limiter l'air chaud qui passe dans le régénérateur et à supprimer ou diminuer les entrées d'air froid induit autour des injecteurs dans le four non étanche. On peut ainsi diminuer l'air primaire de pulvérisation en augmentant la pression de pulvérisation de combustible. A cette fin, il est nécessaire de prévoir un contrôle continu de l'excès d'oxygène dans les chambres de régénération, et de disposer d'injecteurs appropriés de combustible. Les résultats obtenus restent cependant insuffisants et ne permettent pas d'atteindre aisément le pourcentage indiqué plus haut.

Une autre mesure primaire consiste à s'attaquer à la température. Ainsi on peut chercher à modifier la répartition du combustible pour réduire le niveau thermique maximum du four, ou installer des injecteurs appropriés pour diminuer l'impulsion du combustible jusqu'à la limite d'apparition d'imbrûlés dans le conduit de sortie. On peut aussi utiliser un autre agent de pulvérisation que l'air, par exemple de la vapeur, lorsqu'elle est disponible.

Ces mesure primaires ne permettant pas d'atteindre les objectifs fixés, il a été imaginé selon la présente invention un procédé et un dispositif grâce auxquels on combine les effets résultants obtenus par chacune des méthodes primaires connues, c'est à dire qu'on réussit tout d'abord à limiter les pics de température en maintenant la longueur de flamme, et à augmenter le volume du front de flammes pour réduire les températures. En outre, on assure un étagement de la combustion par le combustible et par le carburant. Avantageusement, enfin on agit dans le sens d'une utilisation d'une flamme à 100% d'oxygène au niveau le plus chaud du four.

Le EP-A2-0699634 décrit un four industriel pour la fusion du verre muni de lances de brûleur asymétrique sur la largeur du gueulard de brûleur.

Le US-A-4911744 enseigne une méthode de traitement du verre dans un four de verrerie selon laquelle une lance à oxygène entre le niveau du verre fondu et l'arrivée de fuel de façon à parfaire la combustion de la flamme et améliorer les performances et la productivité du four.

Le DE-C-4244068 enseigne un four de verrerie muni sur au moins un de ses côtés
- d'un moyen d'amenée principal de comburant sous la forme d'une ouverture d'admission d'air,
- d'un moyen d'amenée principal de combustible sous forme de brûleurs disposés sous l'ouverture d'admission d'air,
- d'un moyen pour retarder le contact entre ledit comburant et ledit combustible, constitué par des brûleurs secondaires arrivant dans l'arrivée d'air perpendiculairement à celle-ci produisant une flamme comme couche de séparation entre l'air et le combustible.
   Ainsi ce document enseigne un procédé de combustion pour la fusion du verre dans lequel l'alimentation en combustible et l'alimentation en comburant s'effectuent toutes deux en étalant le contact combustible/comburant ,ce qui limite les pics de température et réduit l'émission de NOx.

Une configuration de four comme celle du DE-C-4244068 mène effectivement à une flamme déficiente en air et donc localement pauvre en oxygène et par conséquent en NOx. Une telle flamme est cependant réductrice, ce qui peut être néfaste pour le verre. L'invention remédie plus particulièrement à ce problème. En effet, selon l'invention, au moins une lance à oxygène où au moins une entrée d'air placé à proximité de la surface du verre protège ladite surface.

Un objet de la présente invention consiste donc en un procédé de combustion pour la fusion du verre dans lequel l'alimentation en combustible et l'alimentation en comburant s'effectuent toutes deux de manière à étaler dans le temps le contact combustible/comburant et/ou à augmenter le volume de ce contact en vue notamment de limiter les pics de température et de réduire l'émission de NOx, la surface du bain de verre fondu étant protégée d'un contact avec une atmosphère réductrice grâce à au moins une lance à oxygène ou au moins une entrée d'air à proximité de ladite surface.

L'invention a également pour objet un four de verrerie du type four pour la fabrication de verre plat fonctionnant notamment en inversion, mettant en oeuvre le procédé selon la revendication 1 et qui est muni sur au moins un de ses côtés :
- d'un moyen d'amenée principal de comburant sous la forme d'une ouverture d'admission d'air,
- d'un moyen d'amenée principal de combustible sous forme d'une pluralité d'injecteurs de gaz ou de fuel disposés sous l'ouverture d'admission d'air,
- d'un moyen pour retarder le contact entre ledit comburant et ledit combustible, et comprenant également un moyen pour protéger la surface du bain de verre fondu d'un contact avec une atmosphère réductrice, sous forme d'au moins une lance à oxygène ou d'au moins une entrée d'air à proximité de ladite surface.

En effet, l'invention prévoit différentes configurations de four permettant de retarder/freiner, étaler dans le temps le contact entre comburant et combustible.

Selon un premier mode de réalisation, le moyen pour retarder le contact entre comburant et combustible comprend au moins un injecteur de gaz «tampon» inerte vis à vis de la combustion, disposé dans l'ouverture d'admission d'air ou à proximité de ladite ouverture au dessus des injecteurs du moyen d'amenée principal de combustible.

Le gaz « tampon » est notamment du type CO_{2.} Mais il peut aussi s'agir avantageusement de gaz de combustion/effluents gazeux/fumées issus du four verrier et que l'on va ainsi pouvoir « recycler » du moins en partie, en venant les extraire au niveau du pied de cheminée par exemple.

Ce gaz, choisi donc pour ne pas intervenir activement dans la combustion, va ainsi être injecté entre les zones d'injections principales de combustible et de comburant pour « repousser » plus loin vers le centre du four le développement de la flamme, qui se trouve ainsi plus étalée, plus large, d'où une meilleure homogénéité de température dans la flamme qui va bien dans le sens d'une réduction des NOₓ.

Selon un second mode de réalisation, le moyen pour retarder le contact entre comburant et combustible est un moyen d'amenée secondaire de combustible sous forme d'au moins un injecteur de gaz ou de fuel disposé dans l'ouverture d'admission d'air ou à proximité de ladite ouverture, au dessus des injecteurs du moyen d'amenée principal de combustible.

En fait, l'invention selon ce mode de réalisation propose de générer le gaz tampon « in situ », en ce sens que ces injecteurs secondaires de combustible, de caractéristiques appropriées détaillées ci-après, vont émettre un combustible qui va réagir avec l'oxygène de la veine d'air issue de l'ouverture d'admission d'air, de manière limitée de façon à créer une nappe de fumées de facto inerte qui va isoler provisoirement la veine d'air du combustible amené principalement par les autres injecteurs. De préférence, les injecteurs secondaires sont disposés dans les joues latérales de l'ouverture d'admission d'air ou sur la paroi sensiblement verticale d'un décrochement notamment horizontal et pratiqué en sole de conduit , à l'abri de l'ouverture d'admission d'air. Ces injecteurs peuvent être disposés soit sensiblement parallèlement aux injecteurs « principaux », de façon à ce que les flux de combustible ainsi émis par les deux types d'injecteurs soient approximativement parallèles ou convergents. On peut aussi choisir de disposer les injecteurs « secondaires » de façon à ce qu'ils soient sensiblement perpendiculaires aux injecteurs « principaux », de façon à ce que les flux de combustible soient toujours approximativement superposés mais qu'ils soient également sensiblement perpendiculaires, ce qui peut être le cas quand les injecteurs sont dans le décrochement mentionné plus haut.

En fait, que le flux de combustible émis par les injecteurs secondaires se trouve « à l'abri » de la veine d'air est avantageux, de manière à développer des flammes sous faible impulsion.

De même, qu'ils soient perpendiculaires aux injecteurs principaux et de facto à la veine d'air issue de l'ouverture d'admission d'air va dans le sens de flammes à faible impulsion permettant de créer la couche de fumée appropriée.

Il est également préférable, dans le même ordre d'idée, que les injecteurs « principaux » (ceux du moyen d'amenée principal de combustible) projettent le combustible avec un débit et une vitesse nettement plus importants que celui provenant des injecteurs « secondaires ». Ainsi, on préfère que la vitesse du combustible provennant des injecteurs principaux (par exemple 40 à 60 m/s) soit au moins trois fois supérieure à celle du combustible provenant des injecteurs secondaires (par exemple 2 à 10 m/s).

De même, on préfère que le débit de combustible émis par les injecteurs secondaires ne constitue qu'environ 5 à 30% du débit de combustible total alimentant le four.

Le four selon l'invention peut en outre comprendre un moyen pour multiplier les sources de comburant afin d'étager au maximum la combustion, notamment de manière à augmenter le volume du contact entre comburant et combustible. Il se présente sous forme d'un moyen d'amenée secondaire de comburant choisi parmi au moins une lance à oxygène ou au moins une entrée d'air, une lance à oxygène étant la solution le plus simple.

Les lances à oxygène (ou entrées d'air) doivent être configurées de manière à participer à la combustion. On choisit donc de préférence de les localiser à proximité des injecteurs « principaux » de combustible, notamment en dessous à proximité, ou alors au même niveau. Si les injecteurs principaux sont ainsi disposés sensiblement dans un plan, en ligne, on peut les alterner avec des lances à oxygène. Dans ce cas, pour obtenir l'étagement de combustion voulu, il est préférable de régler le débit d'air de l'ouverture d'admission d'air principale pour qu'elle soit sous-stoechiométrique en oxygène, les lances à oxygène (ou arrivée d'air) venant faire l'appoint en oxygène pour assurer une combustion totale du combustible.

Par ailleurs, le four selon l'invention comprend un moyen pour protéger la surface du bain de verre fondu d'un contact avec une atmosphère réductrice, sous forme d'au moins une lance à oxygène ou d'au moins une entrée d'air au dessus et à proximité de ladite surface. Dans cette fonction, les lances à oxygène ou entrées d'air ne sont pas vraiment configurées pour participer à la combustion, contrairement au cas précédent. Il est alors préférable que le moyen d'arrivée de comburant principal sous forme d'une ouverture d'admission d'air soit réglé de manière à fournir l'oxygène en stoechiomètrie pour assurer une combustion maximale du combustible.

En fait, ces lances à oxygène ou entrée d'air servent à assurer un environnement permanent oxydant (non réducteur) au-dessus du bain de verre pour éviter de le détériorer, par un simple « nappage » ne nécessitant qu'une faible quantité d'oxygène ou d'air, à faible débit et vitesse relativement élevée.

Avantageusement, l'utilisation de ces diverses arrivées d'oxygène ou d'air décrites plus haut, pour protéger le verre fondu est telle que leur nombre augmente de la partie « amont » vers la partie « aval » de la chambre de combustion : ainsi, il n'est pas indispensable d'en prévoir très en amont, dans la zone d'enfournement des matières vitrifiables, et on peut en densifier le nombre progressivement au long de la chambre de combustion. De préférence, on prévoit aucune de ces arrivées d'oxygène ou d'air dans la zone de la chambre de combustion la plus « amont » où le bain de verre fondu est recouvert d 'un « tapis » de matières vitrifiables non fondues, et on ne les utilise que dans la zone plus « aval » où le bain de verre n'est plus protégé par ce « tapis» selon une répartition régulière et symétrique par rapport à l'axe longitudinal de la chambre de combustion.

De préférence, l'invention s'applique à un four fonctionnant en inversion avec substantiellement une symétrie axiale par rapport à l'axe longitudinal du four dans la répartition des différents moyens d'amenée de gaz/comburant/combustible décrits plus haut.

La présente invention consiste donc notamment en un dispositif pour la réduction de l'émission de NOₓ dans un four de verrerie, dont la chambre de combustion est alimentée en combustible et en comburant par le côté du four, dispositif selon lequel ledit four est équipé d'au moins un brûleur pourvu d'une première série d'injecteurs de combustible disposés sous la veine d'air comburant provenant d'une ouverture latérale ainsi que d'au moins un injecteur de gaz disposé dans l'ouverture ou à proximité de l'ouverture d'admission d'air, au moins une lance d'injection d'oxygène étant prévue sous le flux de gaz combustible, juste au dessus du bain de verre. Le débit de combustible émis par le second type d'injecteur de gaz, dans ou à proximité de l'ouverture d'admission d'air est de l'ordre de 5 à 30% du débit total de combustible.

Selon une réalisation de l'invention, le brûleur est pourvu d'au moins un et de préférence d'au moins deux injecteurs latéraux placés dans une ou des joues latérales de l'ouverture d'admission d'air, au milieu de la veine d'air. Le ou les injecteur(s) est (sont) orienté(s) de façon convergente vers l'axe de la première série d'injecteurs.

En variante, il(s) est (sont) placé(s) sur la partie verticale d'un décrochement du conduit de brûleur, à l'abri de la veine d'air.

Selon une autre caractéristique de l'invention le ou les injecteurs latéraux situés sur le décrochement vertical du conduit de brûleur sont constitués de buses qui peuvent servir à injecter un gaz tampon. On peut aussi, sur le même décrochement prévoir des buses d'injection de gaz tampon, à proximité d'injecteurs latéraux de combustible de manière à pouvoir combiner l'injection de gaz tampon et de combustible.

D'autres caractéristiques et avantages de l'invention ressortiront de la description qui va suivre d'exemples non limitatifs de réalisation dans lesquels il sera fait référence aux dessins annexés qui représentent :
- Figure 1 : une vue schématique partielle, en coupe verticale, d'un four 5 de verrerie équipé de ses deux séries d'injecteurs et des lances d'injection d'oxygène.
- Figure 2 : une vue partielle en coupe horizontale montrant une forme de montage des injecteurs latéraux.
- Figure 3 : une variante de la réalisation du four de la figure 1.
- Figure 4 et 5 : des vues partielles de variantes de réalisation du décrochement vertical du conduit de brûleur.

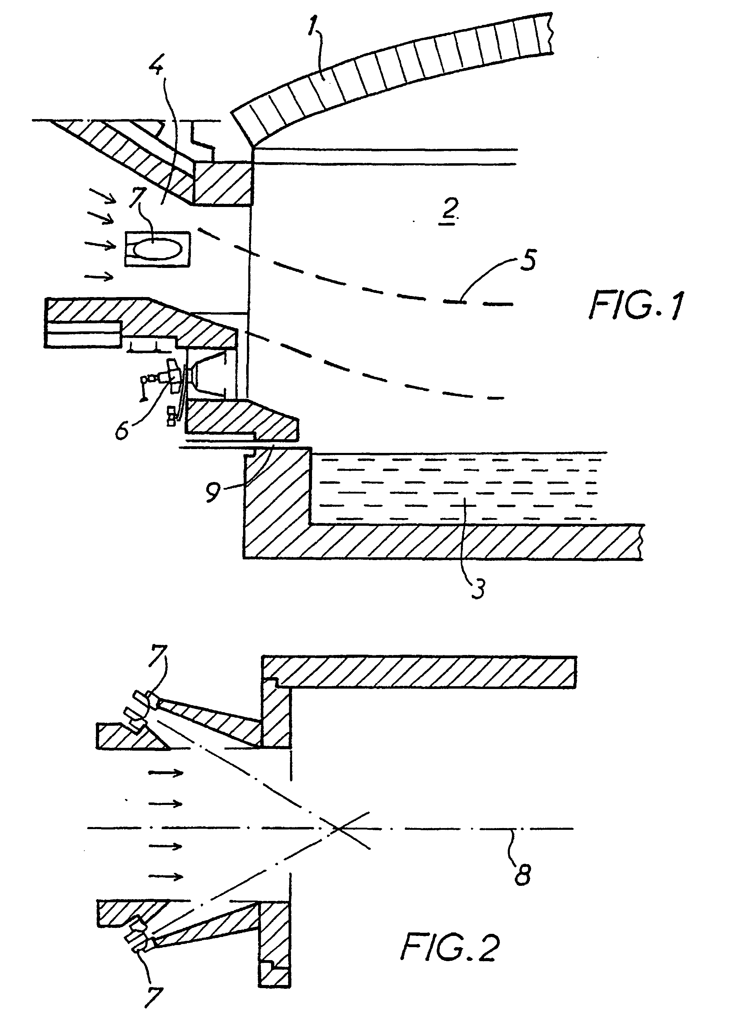

La figure 1 représente schématiquement un four de verrerie 1 avec une chambre intérieure de combustion 2 au dessus du bain de verre 3, la chambre étant alimentée en combustible et comburant par le côté du four.

Le four est un four pour la fabrication de verre plat de type float. Il faut imaginer qu'il est symétrique axialement et équipé de deux régénérateurs latéraux, de manière connue.

L'air insufflé par l'ouverture latérale 4 crée, à l'intérieur du four, une veine d'air matérialisée par les pointillés 5.

Le four est équipé d'au moins un brûleur équipé de deux série d'injecteurs, c'est à dire des injecteurs de gaz ou fuel 6 disposés sous la veine d'air et des injecteurs latéraux de gaz 7, disposés dans les joues de l'ouverture d'admission d'air 4, donc au milieu de la veine d'air, et ils sont orientés de façon convergente vers l'axe 8 des premiers injecteurs 6, comme on le voit plus clairement sur la figure 2. Au dessous des injecteurs 6 sont disposés des lances 9 qui injectent de l'oxygène sous le flux de gaz combustible, l'oxygène se trouvant injecté au dessus du bain de verre 3. La figure 1 représente les lances à proximité directe, les lances peuvent cependant être un peu plus haut que représentées.

Les injecteurs 7 émettent, par les joues du brûleur, une petite partie du combustible, de l'ordre de 5 à 30% de débit total. La flamme primaire se développe donc dans le four avec un excès d'air provenant de l'ouverture 4. Mais sa température est suffisamment basse pour minimiser les NOₓ. Les fumées de cette flamme primaire se mélangent à l'air résiduel avant d'atteindre le jet de combustible provenant des injecteurs 6 disposés sous la veine d'air 5. La flamme secondaire émise se développe dans un mélange d'air et de fumées qui réduit également les NOₓ : c'est le mode de réalisation de la génération de gaz tampon « in situ » évoqué plus haut.

De plus, le débit d'air comburant arrivant par les conduits du brûleur est plus faible que le débit théorique nécessaire, aussi la flamme secondaire est elle déficiente en air et donc localement pauvre en oxygène et par conséquent en NOₓ. Le rôle des lances 9 qui injectent de l'oxygène au dessus du bain de verre et à une vitesse proche de celle du combustible, en relation avec l'angle de convergence du combustible émis par les injecteurs 7, est de déplacer plus ou moins loin dans le four la zone du mélange oxygène combustible, ce qui permet de diminuer la température à la racine de la flamme, et va dans le sens de la diminution des NOₓ. En fait, ici, les lances 9 sont dans une proximité immédiate du verre et permettent d'assurer près du bain de verre 3, une atmosphère oxydante, particulièrement nécessaire pour les verres oxydés de haute qualité en évitant l'influence d'une atmosphère trop réductrice sur la teinte et l'affinage du verre. Si on veut leur faire jouer un rôle actif dans la combustion, il est alors préférable de les prévoir à un niveau plus haut, à proximité du plan où se trouvent les injecteurs 6 : on peut prévoir de les disposer dans ce cas, soit dans la zone de calage, soit en « remplaçant » un certain nombre d'injecteurs (6) de combustible par des lances à oxygène.

Le débit total d'oxygène amené par la veine d'air 5 et les lances 9 est réglé pour être voisin, et même inférieur au minimum requis pour une combustion stoechiométrique.

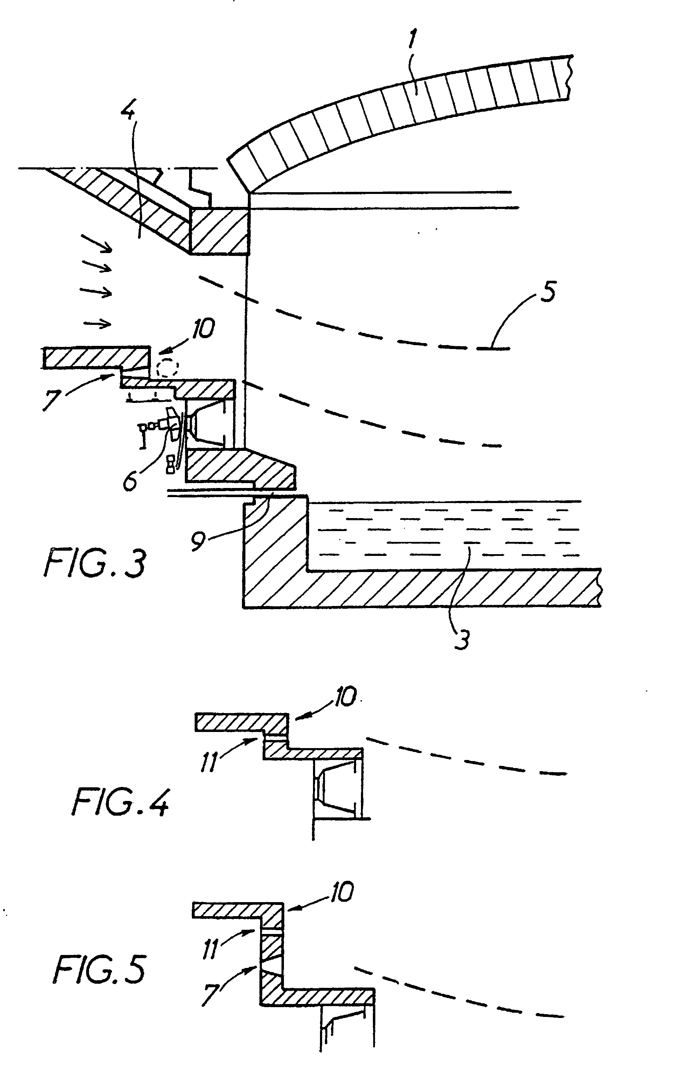

Dans la variante de réalisation de combustion étagée illustrée à la figure 3, les injecteurs latéraux 7 sont placés sur la partie verticale d'un décrochement 10 du conduit de brûleur et par conséquent « à l'abri » de la veine d'air 5. Ils peuvent être disposés de façon à émettre du combustible dans une direction voisine de celle du combustible émis par les injecteurs intermédiaires 6. Ils peuvent être disposés dans une direction perpendiculaire, comme représenté en pointillés mais toujours au dessus du plan dans lequel se trouvent les injecteurs 6. Les injecteurs latéraux 7 peuvent être placés dans la partie frontale du décrochement 10 comme représenté, ou en variante (non représentée) sur les parties latérales dudit décrochement. La combustion est alors retardée et la température à la racine de la flamme est diminuée. Comme dans le cas précédent les injecteurs peuvent être en position convergente vers l'axe du four. La figure 4 présente la même configuration que la figure 3 mais sur la partie verticale du décrochement 10 se trouvent, à la place des injecteurs de gaz 7, des buses d'injection 11 d'un gaz tampon tel que le CO_{2,} dont le rôle est de retarder le mélange air-combustible et donc de favoriser un abaissement de la température aux racines de flamme.

On voit à la figure 5 encore une autre configuration dans laquelle sont combinées la combustion étagée et l'injection de gaz tampon. Ainsi sur la partie verticale du décrochement 10 se trouvent les buses 11 d'injection de gaz tampon et au dessous, les injecteurs 7 de gaz combustible.

L'injection de gaz tampon par les buses 11 se fait à une vitesse voisine de celle du combustible si les injecteurs de combustible sont orientés parallèlement aux buses de gaz tampon. Selon une variante non représentée, ce gaz tampon pourrait être injecté par un tube annulaire directement autour de chaque injecteur de combustible.

Dans tous les cas représentés, l'injection d'oxygène par les lances 9 permet de réduire l'inclinaison vers le haut des injecteurs de combustible, sans avoir à craindre une atmosphère réductrice près des racines de flamme.

Le four précédemment décrit pour un dispositif de combustion étagée permet donc de combiner plusieurs mesures primaires qui réduisent le NOₓ émis dans les meilleures conditions et sans crainte d'une combustion réductrice préjudiciable à la teinte du verre.

Le procédé et le dispositif selon l'invention sont particulièrement adaptés à la fabrication de verre de haute qualité, notamment du verre plat par flottage.

## Revendications

1. Procédé de combustion pour la fusion du verre dans lequel l'alimentation en combustible et l'alimentation en comburant s'effectuent toutes deux de manière à étaler dans le temps le contact combustible/comburant et/ou à augmenter le volume de ce contact en vue notamment de limiter les pics de température et de réduire l'émission de NOx, **caractérisé en ce que** la surface du bain de verre fondu est protégée d'un contact avec une atmosphère réductrice grâce à au moins une lance à oxygène (9) ou au moins une entrée d'air à proximité de ladite surface.

2. Four de verrerie (1) fonctionnant notamment en inversion, mettant en oeuvre le procédé selon la revendication 1, muni sur au moins un de ses côtés :
- d'un moyen d'amenée principal de comburant sous la forme d'une ouverture d'admission d'air (4),
- d'un moyen d'amenée principal de combustible sous forme d'une pluralité d'injecteurs (6) de gaz ou de fuel disposés sous l'ouverture d'admission d'air (4),
- d'un moyen (7, 10, 11) pour retarder le contact entre ledit comburant et ledit combustible,
**caractérisé en ce qu'**il est du type four pour la fabrication de verre plat et **en ce qu'**il comprend également un moyen pour protéger la surface du bain de verre fondu d'un contact avec une atmosphère réductrice, sous forme d'au moins une lance à oxygène (9) ou d'au moins une entrée d'air à proximité de ladite surface.

3. Four selon la revendication 2 ***caractérisé en ce que*** le moyen (7, 10, 11) pour retarder le contact entre comburant et combustible comprend au moins un injecteur (11) de gaz « tampon » inerte vis à vis de la combustion, disposé dans l'ouverture d'admission d'air (4) ou à proximité de ladite ouverture au-dessus des injecteurs (6) du moyen d'amenée principal de combustible.

4. Four selon la revendication 3 ***caractérisé en ce que*** l'injecteur (11) est alimenté en gaz inerte du type CO2 et/ou en gaz inerte provenant du recyclage de fumées/effluents gazeux issus dudit four.

5. Four selon la revendication 2 ***caractérisé en ce que*** le moyen (7) pour retarder le contact entre comburant et combustible est un moyen d'amenée secondaire de combustible sous forme d'au moins un injecteur (7) de gaz ou de fuel disposé dans l'ouverture d'admission d'air (4) ou à proximité de ladite ouverture au-dessus des injecteurs (6) du moyen d'amenée principal de combustible.

6. Four selon l'une des revendications 2 à 5 ***caractérisé en ce que*** le moyen (7, 10, 11) pour retarder le contact entre comburant et combustible comprend des injecteurs (7) placés dans les joues latérales de l'ouverture d'admission d'air (4), notamment de façon convergente vers l'axe (8) des injecteurs (6) du moyen d'amendée principal du combustible ou sur la paroi sensiblement verticale d'un décrochement (10) à l'abri de l'ouverture d'admission d'air (4).

7. Four selon la revendication 6 ***caractérisé en ce que*** les injecteurs (7, 11) sont disposés sensiblement parallèlement aux injecteurs (6) du moyen d'amenée principal de combustible.

8. Four selon la revendication 6 ***caractérisé en ce que*** les injecteurs (7, 11) sont disposés sensiblement perpendiculairement aux injecteurs (6) du moyen d'amenée principal de combustible.

9. Four selon l'une des revendications 3 à 8 ***caractérisé en ce que*** les injecteurs (6) du moyen d'amenée principal de combustible projettent du combustible à une vitesse au moins 3 fois supérieure à celles des gaz projetés par les injecteurs (7, 11) du moyen pour retarder le contact entre comburant et combustible.

10. Four selon l'une des revendications 2 à 9 ***caractérisé en ce qu***'il comprend aussi un moyen pour étager la combustion et/ou augmenter le volume du contact entre comburant et combustible, au moyen d'amenée secondaire de comburant choisi parmi au moins une lance à oxygène ou au moins une entrée d'air.

11. Four selon la revendication 10 ***caractérisé en ce que*** le moyen d'amenée secondaire de comburant comprend une pluralité de lances à oxygène disposée sensiblement au même niveau que les injecteurs (6) du moyen d'amenée principal de combustible, notamment dans une configuration telle que lances et injecteurs (6) s'alternent sur un même niveau.

12. Four selon la revendication 10 ou 11 ***caractérisé en ce que*** le moyen d'amenée principal de comburant (4) est sous-stoechiométrique en oxygène pour assurer la combustion de tout le combustible.

13. Four selon l'une des revendications 10 à 12 ***caractérisé*** ***en ce qu***'il est équipé de lances à oxygène ou d'entrées d'air latérales dont le nombre augmente de la partie « amont » à la partie « aval » de la chambre de combustion.

14. Four selon l'une des revendications 2 à 13 ***caractérisé en ce qu***'il fonctionne en inversion avec une symétrie axiale dans les moyens d'amenée de gaz/combustible/comburant latéraux.

## Patentansprüche

1. Verbrennungsverfahren für das Erschmelzen von Glas, in welchem die Zufuhr des Brennstoffs und die des Verbrennungsmittels beide derart erfolgen, dass der Brennstoff/Verbrennungsmittel-Kontakt im Laufe der Zeit vergleichmäßigt und/oder das Kontaktvolumen vergrößert wird, um insbesondere die Temperaturspitzen zu begrenzen und die NOₓ-Emission zu verringern, **dadurch gekennzeichnet, dass** die Oberfläche der Glasschmelze durch mindestens eine Sauerstofflanze (9) oder mindestens einen Lufteintritt, die/der sich in der Nähe dieser Oberfläche befindet, vor Berührung mit einer reduzierenden Atmosphäre geschützt wird.

2. Glasschmelzofen (1), der insbesondere mit Wechsel arbeitet, in welchem das Verfahren nach Anspruch 1 durchgeführt wird und welcher auf mindestens einer Seite mit
- einem Hauptzufuhrmittel für das Verbrennungsmittel in Form eines Luftports (4),
- einem Hauptzufuhrmittel für den Brennstoff in Form einer Vielzahl von Gas- bzw. Brennstoffdüsen (6), die unter dem Luftport (4) angeordnet sind, und
- einem Mittel (7, 10, 11) zur Verzögerung des Kontakts des Verbrennungsmittels mit dem Brennstoff
versehen ist, **dadurch gekennzeichnet, dass** er vom Typ eines Schmelzofens für die Herstellung von Flachglas ist, **und dass** er auch ein Mittel zum Schutz der Oberfläche der Glasschmelze vor Berührung mit einer reduzierenden Atmosphäre in Form von mindestens einer Sauerstofflanze (9) oder mindestens einem Lufteintritt, die/der sich in der Nähe dieser Oberfläche befindet, enthält.

3. Ofen nach Anspruch 2, **dadurch gekennzeichnet, dass** das Mittel (7, 10, 11) zur Verzögerung des Kontakts des Verbrennungsmittels mit dem Brennstoff mindestens eine Düse (11) für ein gegenüber der Verbrennung inertes "Puffergas" umfasst, die im Luftport (4) oder in dessen Nähe über den Düsen (6) des Hauptzufuhrmittels für den Brennstoff angeordnet ist.

4. Ofen nach Anspruch 3, **dadurch gekennzeichnet, dass** durch die Düse (11) ein Inertgas vom Typ CO₂ und/oder ein Inertgas strömt, das aus der Rückführung von aus dem Ofen kommenden Rauchgas/gasförmigen Abprodukten stammt.

5. Ofen nach Anspruch 2, **dadurch gekennzeichnet, dass** das Mittel (7) zur Verzögerung des Kontakts des Verbrennungsmittels mit dem Brennstoff ein Nebenzufuhrmittel für den Brennstoff in Form von mindestens einer Gas- oder Brennstoffdüse (7) ist, die im Luftport (4) oder in dessen Nähe über den Düsen (6) des Hauptzufuhrmittels für den Brennstoff angeordnet ist.

6. Ofen nach einem der Ansprüche 2 bis 5, **dadurch gekennzeichnet, dass** das Mittel (7, 10, 11) zur Verzögerung des Kontakts des Verbrennungsmittels mit dem Brennstoff Düsen (7) umfasst, die in den Seitenwänden des Luftports (4), insbesondere zur Achse (8) der Düsen (6) des Hauptzufuhrmittels für den Brennstoff konvergierend, oder an der im Wesentlichen vertikalen Wand eines Absatzes (10) im Strömungsschatten des Luftports (4) angeordnet sind.

7. Ofen nach Anspruch 6, **dadurch gekennzeichnet, dass** die Düsen (7, 11) im Wesentlichen parallel zu den Düsen (6) des Hauptzufuhrmittels für den Brennstoff angeordnet sind.

8. Ofen nach Anspruch 6, **dadurch gekennzeichnet, dass** die Düsen (7, 11) im Wesentlichen quer zu den Düsen (6) des Hauptzufuhrmittels für den Brennstoff angeordnet sind.

9. Ofen nach einem der Ansprüche 3 bis 8, **dadurch gekennzeichnet, dass** die Düsen (6) des Hauptzufuhrmittels für den Brennstoff diesen mit einer Geschwindigkeit einspritzen, die mindestens 3 Mal höher als die der Gase ist, die von den Düsen (7, 11) des Mittels zur Verzögerung des Kontakts des Verbrennungsmittels mit dem Brennstoff eingeblasen werden.

10. Ofen nach einem der Ansprüche 2 bis 9, **dadurch gekennzeichnet, dass** er weiterhin ein Mittel zum Abstufen der Verbrennung und/oder zum Vergrößern des Kontaktvolumens des Verbrennungsmittels mit dem Brennstoff im Nebenzufuhrmittel für das Verbrennungsmittel enthält, das aus mindestens einer Sauerstofflanze oder mindestens einem Lufteintritt ausgewählt ist.

11. Ofen nach Anspruch 10, **dadurch gekennzeichnet, dass** das Nebenzufuhrmittel für das Verbrennungsmittel eine Vielzahl von Sauerstofflanzen umfasst, die im Wesentlichen auf derselben Höhe wie die Düsen (6) des Hauptzufuhrmittels für den Brennstoff, insbesondere in einer derartigen Gestaltung, dass sich Lanzen und Düsen (6) auf derselben Höhe abwechseln, angeordnet sind.

12. Ofen nach Anspruch 10 oder 11, **dadurch gekennzeichnet, dass** das Verbrennungsmittel des Hauptzufuhrmittels (4) an Sauerstoff unterstöchiometrisch ist, um die Verbrennung des gesamten Brennstoffs sicherzustellen.

13. Ofen nach einem der Ansprüche 10 bis 12, **dadurch gekennzeichnet, dass** er mit Sauerstofflanzen oder seitlichen Luftports ausgerüstet ist, deren Anzahl sich vom "hinteren" zum "vorderen" Teil der Brennkammer erhöht.

14. Ofen nach einem der Ansprüche 2 bis 13, **dadurch gekennzeichnet, dass** er mit Wechsel mit axialer Symmetrie in den seitlichen Gas/Brennstoff/Verbrennungsmittel-Zufuhrmitteln arbeitet.

## Claims

1. Combustion method for melting glass in which the supply of fuel and the supply of oxidant both take place so as to spread out in time the fuel/oxidant contact and/or to increase the volume of this contact with a view in particular to limiting the temperature peaks and reducing the emission of NOx, **characterised in that** the surface of the bath of molten glass is protected from contact with a reducing atmosphere by means of at least one oxygen lance (9) or at least one air inlet close to the said surface.

2. Glassworks furnace (1) functioning in particular in inversion, implementing the method according to Claim 1, provided on at least one of its sides:
- with a main oxidant feed means in the form of an air inlet opening (4),
- with a main fuel feed means in the form of a plurality of gas or oil injectors (6) disposed under the air inlet opening (4),
- with a means (7, 10, 11) for delaying contact between the said oxidant and the said fuel,
**characterised in that** it is of the flat glass manufacturing furnace type and **in that** it also comprises a means for protecting the surface of the bath of molten glass from contact with a reducing atmosphere, in the form of at least one oxygen lance (9) or at least one air inlet close to the said surface.

3. Furnace according to Claim 2, **characterised in that** the means (7, 10, 11) for delaying contact between oxidant and fuel comprises at least one injector (11) for "buffer" gas inert vis-à-vis combustion, disposed in the air inlet opening (4) or close to the said opening above the injectors (6) of the main fuel feed means.

4. Furnace according to Claim 3, **characterised in that** the injector (11) is supplied with inert gas of the CO₂ type and/or inert gas coming from the recycling of fumes/gaseous effluent issuing from the said furnace.

5. Furnace according to Claim 2, **characterised in that** the means (7) for delaying contact between oxidant and fuel is a secondary fuel feed means in the form of at least one gas or oil injector (7) disposed in the air inlet opening (4) or close to the said opening above the injectors (6) of the main fuel feed means.

6. Furnace according to one of Claims 2 to 5, **characterised in that** the means (7, 10, 11) for delaying contact between oxidant and fuel comprises injectors (7) placed in the side cheeks of the air inlet opening (4), particularly in a convergent fashion towards the axis (8) of the injectors (6) of the main fuel feed means or on the substantially vertical wall of a step sheltered from the air inlet opening (4).

7. Furnace according to Claim 6, **characterised in that** the injectors (7, 11) are disposed substantially parallel to the injectors (6) of the main fuel feed means.

8. Furnace according to Claim 6, **characterised in that** the injectors (7, 11) are disposed substantially perpendicular to the injectors (6) of the main fuel feed means.

9. Furnace according to one of Claims 3 to 8, **characterised in that** the injectors (6) of the main fuel feed means project fuel at a speed at least three times greater than that of the gases projected by the injectors (7, 11) of the means for delaying contact between oxidant and fuel.

10. Furnace according to one of Claims 2 to 9, **characterised in that** it also comprises a means for staging the combustion and/or increasing the volume of the contact between oxidant and fuel, by means of a secondary feed of oxidant chosen from amongst at least one oxygen lance or at least one air inlet.

11. Furnace according to Claim 10, **characterised in that** the secondary oxidant feed means comprises a plurality of oxygen lances disposed substantially at the same level as the injectors (6) of the main fuel feed means, in particular in a configuration such that lances and injectors (6) alternate on the same level.

12. Furnace according to Claim 10 or 11, **characterised in that** the main oxidant feed means (4) is substoichiometric in oxygen in order to ensure combustion of all the fuel.

13. Furnace according to one of Claims 10 to 12, **characterised in that** it is equipped with oxygen lances and/or side air inlets whose number increases from the "upstream" part to the "downstream" part of the combustion chamber.

14. Furnace according to one of Claims 2 to 13, **characterised in that** it functions in inversion with an axial symmetry in the lateral gas/fuel/oxidant feed means.
